# EUROPEAN PATENT SPECIFICATION

(11) **EP 3 117 152 B1**
(45) Date of publication and mention of the grant of the patent: **20.11.2019**
(21) Application number: 15709202.4
(22) Date of filing: 12.03.2015
(51) Int. Cl.: F24C 15/20, F28D 21/00, F28D 15/02

(54) **KITCHEN EXTRACTOR HOOD WITH THERMAL ENERGY RECOVERY**
DUNSTABZUGSHAUBE MIT THERMISCHER ENERGIERÜCKGEWINNUNG
HOTTE DE CUISINE AVEC RÉCUPÉRATION D'ÉNERGIE THERMIQUE

(30) Priority: 12.03.2014 IT MI20140389
(43) Date of publication of application: 18.01.2017
(73) Proprietor: Faber S.p.A., 60044 Fabriano (Ancona) (IT)
(72) Inventor: BOTTARO, Oreste, I-Pieve di Bono (TN) (IT); FAGINOLI, Francesco, I-60044 Fabriano (AN) (IT); BIOCCO, Simone, I-60044 Fabriano (AN) (IT)
(74) Representative: Lemcke, Brommer & Partner Patentanwälte Partnerschaft mbB
(86) International application number: PCT/EP2015/055159
(87) International publication number: WO 2015/136032

(56) References cited:
- EP-A2- 2 110 609
- CN-A- 101 368 744
- US-A- 2 934 913
- US-A1- 2013 098 582

## Description

The present invention concerns a kitchen extractor hood, which allows to recover thermal energy from the flow of a gaseous mixture sucked by the hood itself, a gaseous mixture which is formed as a consequence of the operation of a cooktop underneath.

It is known that the traditional kitchen hoods are provided with a suction device and can operate in two different modes as follow:
- a suction operation, wherein the flow of a gaseous mixture sucked from the environment in which the hood is located (internal environment), is completely exhausted to the external world (external environment) via an exhaust duct;
- filtering operation, wherein the flow of a gaseous mixture sucked from the internal environment is conveyed, via a filtering duct, toward a number of filters (for instance, activated carbon filters) at the output from which it is subsequently re-injected into the internal environment.

It is also known that energy saving became more and more important in the last years, consequently it becomes important to recover the energy that previously was lost, in this specific case part of the energy lost during the preparation of meals and/or the change of air. It is worth saying that the hoods featuring a filtering operation are already hoods of this type, considering that they don't disperse heat in the external environment, even though they don't allow a change of air. Therefore, the problem of recovering thermal energy only exists for the hoods featuring a suction operation, which will be referred to as extractor hoods here below.

In the Italian patent application MI2008A661 a kitchen extractor hood is described which allows to recover the thermal energy contained in the gaseous mixture sucked by it. The hood comprises a first heat exchanger which allows to subtract a first amount of heat from the sucked gaseous mixture. The first heat exchanger is connected to compression means, which are in turn connected to a second heat exchanger which allows to subtract a second amount of heat from the gaseous mixture, proportional to that recovered in the first heat exchanger. The second heat exchanger is connected to the first heat exchanger via a lamination device. In the two heat exchangers, a vector fluid flows in the lamination device and in the compression means, which realizes a thermodynamic cycle whereby the saturated vapors of the vector fluid are compressed.

The first heat exchanger can also be connected to a partialization circuit which allows to use a portion only of the first heat exchanger. The partialization circuit possibly comprises valve partialization means to adjust the amount of the vector fluid that flows in the first heat exchanger.

Even though the extractor hood whose basic features have been described above proved to be very efficient, it presents the non-negligible drawbacks of being rather complex, of being provided with an external lamination/condensation unit, besides being expensive and having significant overall dimensions.

Extractor hoods provided with a thermal energy recovery device consisting of a crossflow heat exchanger are already present on the market. Hoods of this type are for instance the model LE155/250 by Johnson and Starley Ltd and the model Sentinel Kinetic CS L by Vent-Axia Ltd. However, these hoods too feature significant overall dimensions, especially in height and width, which is possibly a non negligible drawback conditioning the choice concerning the furnishing of a kitchen, especially when the space available is small, so as to lead to renouncing the installation of a heat recovery extractor hood.

US 2 934 913 A discloses combination kitchen appliances performing water-heating, food-refrigerating, air-conditioning, kitchen-exhausting and ventilating functions.

EP 2 110 609 A2 discloses a kitchen hood for recovering a heat quantity contained in gas mixture.

US 2013/0098582 A1 discloses a using of efficient small diameter heat pipes with multiple evaporator/condenser zones in a single heat pipe.

CN 101 368 744 A discloses a kitchen extractor hood with the features of the upper part of claim 1 and incorporating also a heat recovery device based on a heat pipe exchanger with a plurality of parallel pipes and a diaphragm perpendicular to the pipes separating the evaporation section from the condensation section of the heat exchanger.

A purpose of the present invention is to provide a kitchen extractor hood that allows to recover part of the thermal energy contained in the sucked gaseous mixture, but features overall dimensions definitely smaller than those of the extractor hoods provided with a recovery device known so far, besides not having any external unit (contrary to the hood according to MI2008A661).

Before describing how is said purpose achieved by the present invention and is its respective technical problem solved, let's remember that a type of heat ex changer known under the name of heat pipe or Perking pipe and better known today as heat pipe (see its respective description in Wikipedia) is already known since at least 200 years. It is a matter of a highly efficient thermal exchange device, which is capable of transporting big amounts of thermal energy in the presence of an even very small difference in temperature between the hot and cold interfaces (as small as 1 degree only).

Such device usually comprises a pipe hermetically closed at its two ends, made of a metal featuring a good thermal conductivity (for instance copper or aluminium). A small quantity of a refrigerating fluid in saturation conditions, for instance water, ethanol, ammonia, mercury, a hydrofluorocarbon (HFC) or a hydrochlorofluorocarbon (HCFC) has been inserted into the pipe. In practice, a small quantity of refrigerating liquid is present in the pipe, whereas the rest of the pipe is filled with the vapor of the same refrigerant.

If the pipe is held vertical or tilted with respect to the horizontal line and its end featuring the lower elevation is heated (hot end or evaporation section) so as to make the refrigerating liquid vaporize, an increase in the internal pressure of the pipe results. Simultaneously the latent vaporization heat absorbed by the liquid makes the temperature of the hot end decrease. The vapor pressure in correspondence with the hot end is higher than that in correspondence with the other end (cold end or condensation section), consequently a very fast transfer of vapor takes place toward the cold end. It has been found that the movement of the vapor molecules takes place approximately at the velocity of sound (300 m/s ca.) and in practice depends on the velocity of condensation of the vapor at the cold end. Because of gravity, the liquid that condensates in correspondence with the cold end (condensation section) goes back toward the hot end (evaporation section). Therefore, it is a matter of a device very efficient in transferring heat (a kind of superconductor), with the further advantage of not having moving parts, hence it does not require any maintenance due to wear nor does it consume energy, losses of gas because of diffusion through the walls of the pipe only possibly occurring in the long term. The thermal exchange capacity can be estimated to equal 7,000 W/m3K and is roughly proportional to the square of the diameter. Unlike a thermal conductor, the heat transfer capacity is, within certain limits, almost independent of the length of the pipe, in the sense that a 1 m long pipe features the same heat rate as a 2 m long pipe of the same type. However, the latter puts a greater surface of thermal exchange available, consequently it makes it easier to reach the limit of internal heat transportation capacity.

It is worth noting that varying the tilt of the pipe results in varying the amount of the thermal exchange. Equipping a simple device that allows to vary the tilt of the pipe makes it possible to adjust the thermal exchange.

The kitchen extractor hood according to the present invention is provided with means for generating a first flow of a gaseous mixture taken from the internal environment in which the hood is located and releasing it into the external environment. Furthermore the hood according to the present invention is also provided with means for generating a second flow of a gaseous mixture taken from the external environment and/or from the internal environment and injecting it into the internal environment. The hood according to the present invention is also provided with means for recovering part of the thermal energy contained in the first flow and transferring it to the second flow, wherein the means for recovering thermal energy comprise a heat recovery device comprising a heat exchanger of the heat pipe type, having an evaporation section dealing with the first flow and a condensation section dealing with the second flow, and wherein the heat recovery device based on a heat pipe exchanger comprises a plurality of equal pipes, arranged parallel to but spaced from each other, the pipes being hermetically closed at their two ends and containing a refrigerating fluid in the saturation condition. The kitchen extractor hood according to the present invention further comprises a diaphragm perpendicular to the pipes, but such as not to interrupt them, which separates the first flow from the second flow, thus separating the evaporation section from the condensation section of the heat exchanger, wherein upstream, with reference to the second flow of the condensation section there are provided second flow filtering means of the type used in hoods and means for varying the tilt of the pipes of the heat recovery device. According to the present invention the position of the diaphragm is determined as a function of the ratio between the volumetric rates of the first flow and of the second flow of the thermal exchange surface of the heat exchanger, and of the tilt of the pipes of the latter.

According to a variant, the return of the liquid toward the evaporating section can also be obtained by capillarity, by using, for instance, a material featuring a capillary structure coated inside the pipe. In this event, the pipe can be arranged horizontally and even be lightly countersloped.

The temperature at which a heat pipe exchanger is efficient depends on the refrigerating liquid used and on its boiling temperature, which is in turn depending on the pressure inside the pipe.

It is possible to implement a heat exchanger formed of several parallel heat pipes, arranged in battery to each other, possibly finned to foster thermal exchange, and an intermediate diaphragm that does not interrupt the pipes and is perpendicular thereto, whose function is that of separating the gaseous flow from which to recover thermal energy from the gaseous flow that thermal energy is to be transferred to. The diaphragm is located in correspondence with the center line of the heat exchanger if the two flows feature the same rate. Otherwise, the diaphragm can be located in a position ranging from 25% to 75% of the length of the pipes, depending on their respective air flow rates. The separator diaphragm isolates the two air flow rates very effectively, to such an extent that it is possible to think having no contamination between the two flows up to pressure differentials between them of up to 12 kPa. If necessary, a dual-wall diaphragm with a gap venting to the external world could be used.

All of this results in an extremely compact and highly efficient heat exchanger.

Heat pipe exchangers have been used so far for cooling electronic components (in particular for cooling portable PCs) and in the field of the thermal solar plants, but also in big air conditioning systems for offices, hospitals, theaters, restaurants, shopping centers, and centralized systems of residential buildings, as well as in industrial dehumidification, drying, and coffee roasting systems, foundries, textile and food factories, and spray booths.

Coming back to the (previously mentioned) purpose of the present invention, it is achieved and its technical problem solved thanks to an extractor hood according to attached claim 1. Other features of said hood are set in the remaining claims.

As a matter of fact, the inventor of the present invention realized that using a heat pipe exchanger as a thermal energy recovery device made it possible to obtain an extractor hood featuring overall dimensions definitely smaller than those of the known extractor hoods provided with a recovery device as described before, which represents a very significant advantage, besides achieving a high efficiency in thermal energy recovery.

The invention will be more easily understandable upon reading the following description of an illustrative embodiment thereof. In such description, reference will be made to the attached drawings, in which:
- figure 1: is a perspective view of an extractor hood with thermal energy recovery, according to the present invention;
- figure 2: is an elevation view thereof according to the arrow 2 of figure 1;
- figures 3-5: are three different perspective views of the thermal energy recovery device only being part of the hood according to figures 1 and 2;
- figure 6: is a perspective view of half of the same device, obtained by sectioning it according to a median vertical plane;
- figure 7: is a perspective view of the heat pipe exchanger only being part of said recovery device;
- figure 8: is a top view thereof;
- figure 9: is an elevation view thereof according to the arrow 9 in figure 7;
- figures 10-13: are sketches which very schematically illustrate how could a hood according to the present invention be structured and what its operating modes might be.

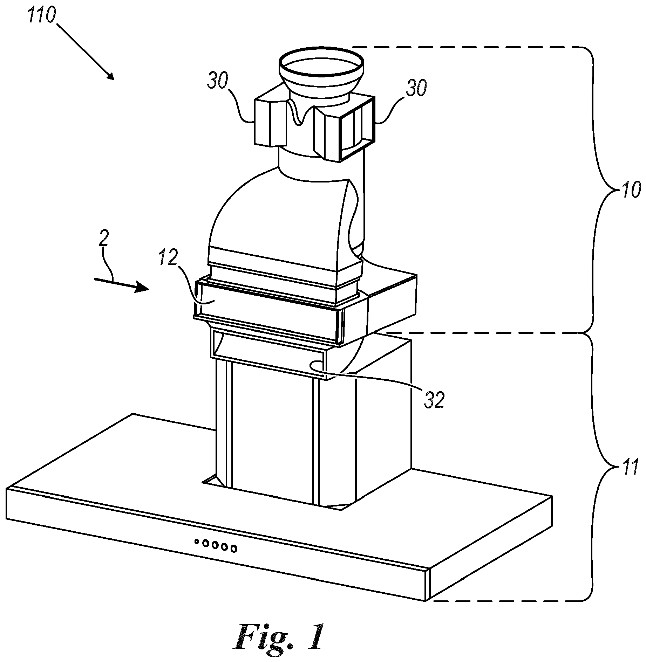

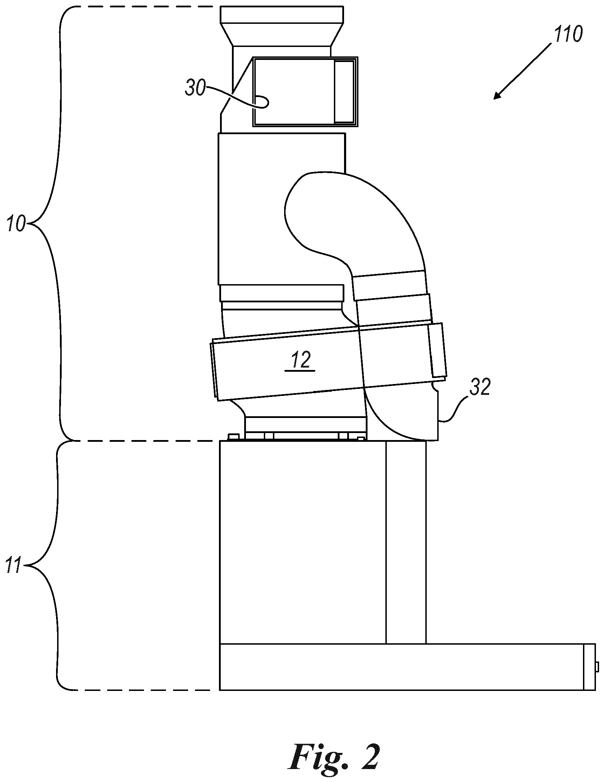

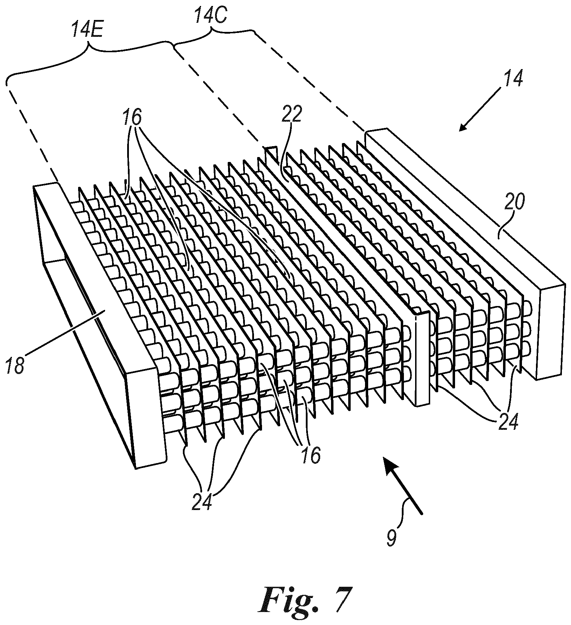

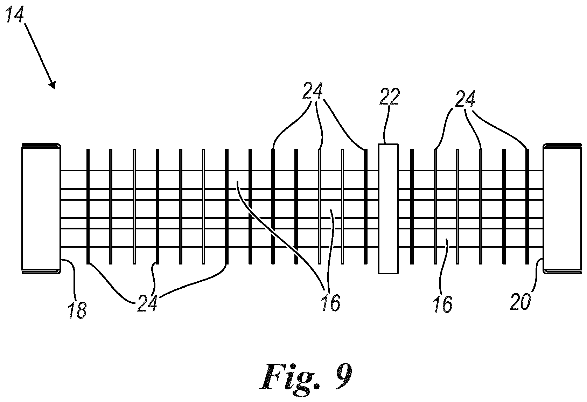

The extractor hood 110 visible in figures 1 and 2 comprises a true extractor hood 11, of a conventional type (a so called overturned-T one), and means 10 for recovering thermal energy. In the part 12, which substantially has a shape of a squeezed parallelepiped, of the recovery means 10 a recovery device 14 is enclosed, consisting of a heat exchanger 14, of a heat pipe type, which is shown isolated from the rest in figures 7-9. In the specific case here illustrated the heat exchanger 14 comprises a battery of forty-five heat pipes, referred to by the reference numeral 16, arranged in three superimposed ranks, each composed of fifteen hot pipes 16. The latter are so spaced from each other as to enable a gaseous flow to pass through them. Unlike the case here illustrated, the intermediate pipes 16 might also be arranged staggered with respect to those of the remaining two ranks.

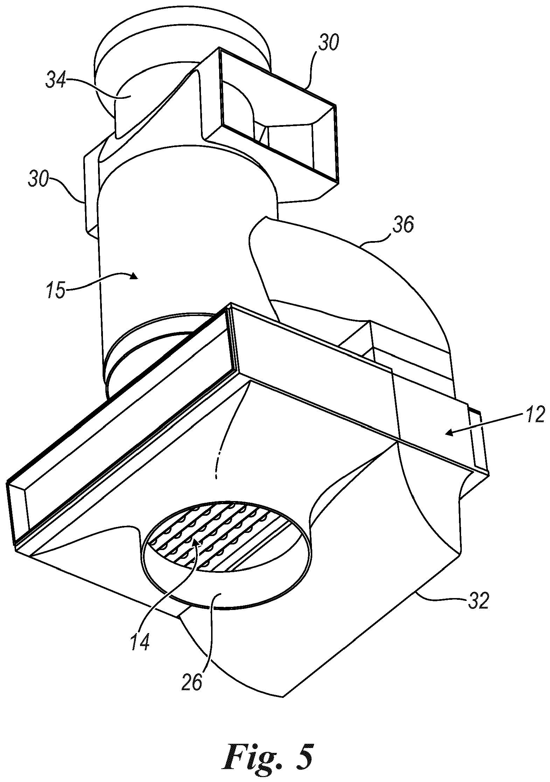

In this specific case the pipes 16 are made of cupper, with an inner diameter of 9.52 mm, a wall thickness of 0.43 mm, and a length of approximately 300 mm and sealed at both of their ends. Conveniently, inside the pipes 16 are ruled to increase the surface of thermal exchange with the refrigerating fluid flowing internally thereto. The two ends of the pipes 16 are fixed to their respective support elements 18 and 20 perpendicular to the pipes 16 and made of a galvanized and bent iron sheet. A diaphragm 22, also made of a galvanized and bent sheet and also perpendicular to the pipes 16, is used to separate (without interrupting the continuity of the pipes 16) the two sections that make up the heat exchanger 14, i.e. the condensation section, referred to with the reference 14C in figure 5, and the evaporation section, identified by the reference 14E. Consequently the diaphragm 22 separates the respective flows. It is also worth noting that the diaphragm 22 is arranged at a distance from the support element 20 that is approximately 1/3 of the length of the pipes 16, this in order to take account of the ratio between the rates of the two gaseous flows concerning the evaporation section 14E and the condensation section 14C respectively, as well as the thermal exchange surface of the heat exchanger 14 and the tilt of the pipes 16.

The pipes 16 contain a refrigerating fluid, in this specific case that indicated in the ANSI/ASHRAE Standard 34-2004 by the abbreviation R134a, its quantity being 10 g per pipe. This fluid is a hydrofluorocarbon (HFC) as commonly used in refrigerators.

In order to foster the thermal exchange between the pipes 16 and the two gas flows concerning them, a sequence of equally spaced fins 24 has been provided (for instance fins made of aluminium, with a thickness of 0.1 mm and arranged at a distance between their axis of 2.1 mm) which allow to substantially increase the thermal exchange surface. In this specific case the fins 24 are perpendicular to the pipes 16, obviously without interrupting their continuity.

Preferably, in order to optimize the yield of the heat exchanger 14, the pipes 16 are tilted by 5° to 10° with respect to the horizontal line, however it has been proved that the operation is satisfactory even with the pipes 16 arranged horizontally (zero tilt).

A heat pipe exchanger like that represented and indicated by the reference numeral 14, whose dimensions don't exceed 30 x 30 x 7 cm, proved to be particularly suitable for recovering thermal energy in a kitchen extractor hood like that indicated by the reference numeral 110 in figures 1 and 2, which consequently can have very small dimensions and anyway definitely smaller than those of the known extractor hoods equipped with a thermal energy recovery device, which represents an important advantage.

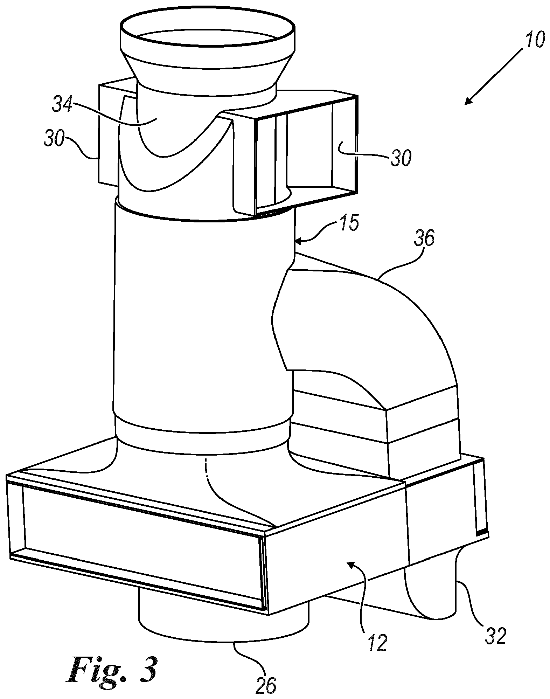

As figures 3-6 also show, the energy recovery device 10 also comprises a suction aperture 26, through which the gaseous mixture sucked by the true hood 11, installed above a respective cooktop (not shown in the figures), passes through.

It is worth pointing out that even though in the case of the hood 110 the conventional filters used to filter out the dust and the fats that are normally carried by the gaseous mixture sucked by the true hood 11 and which goes through the suction aperture 26 of the heat recovery means 10 are not visible, however such filters are anyway provided in the true hood 11, to prevent the internal parts of the hood 110, and in particular the pipes 16 of the heat exchanger 14, from getting dirty in short time, thus jeopardizing the efficiency of the heat exchanger and more in general of the hood 110, and even causing sanitary problems. Such filters will in particular be provided upstream (with reference to the sucked flow) with respect to the suction aperture 26 of the heat recovery means 10.

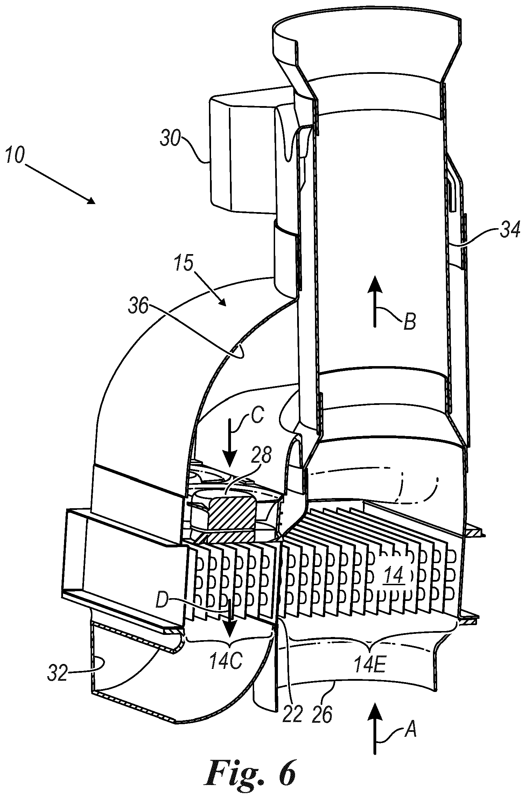

It is also worth pointing out that the flow of gaseous mixture sucked through the suction aperture 26 (the flow indicated by the arrow A in figure 6 and which will be shortly referred to as first flow here below) is created either by natural draught whenever the section aperture 26 is in particular in communication with a chimney which drains outwards, on usually via a first suction device (not visible in the figures, but of the conventional type) arranged in the specific illustrated case internally to the true hood 11, just downstream with respect to said filters (with reference to the direction of the first flow A), but which might even be provided even more downstream.

Going on in the description of the heat recovery means 10 (with reference above all to figure 6), immediately downstream with respect to the suction aperture 26 the first flow A, consisting of a hot gaseous mixture, encounters the evaporation section 14E of the heat exchanger 14, whereby in the pipes 16 the refrigerating liquid contained therein evaporates which results in a thermal energy being transferred to such liquid, which just evaporates. Therefore the first flow, downstream with respect to the evaporation section 14E, goes on as a flow B featuring a temperature lower than that of the flow A and is outlet into the external environment (exhaust flow).

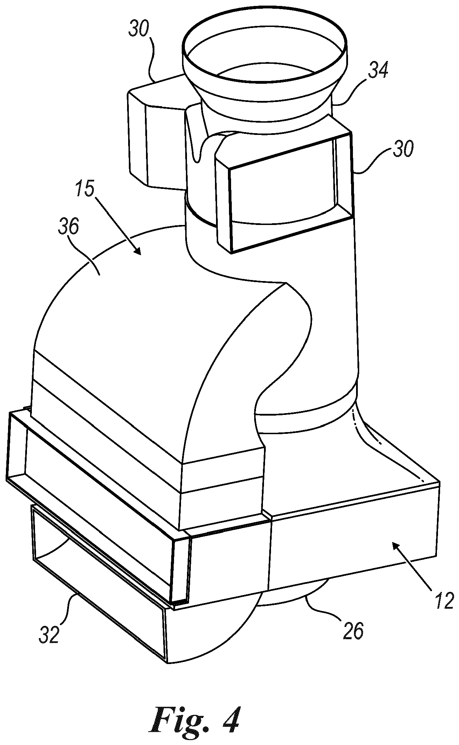

The condensation section 14C of the heat exchanger 14 is in turn concerned, whenever the hood 110 is in operation, by a second air flow, represented by arrow C in figure 4, which is generated by a second suction device included in its respective canalization 36. This second suction device is in this specific case formed of three fans, arranged on one and the same horizontal plane, which operate in parallel with each other, one of which, identified by the reference numeral 28, is visible in figure 4. The second flow C is obtained by picking up air from the internal environment via (in the specific case here illustrated) two symmetrical located inlets 30 (one inlet only might be alternatively provided, indeed), or from the external environment, if there is provided that both inlets 30 are connected to the latter via a respective duct (not shown in the figure). Anyway, the second flow C, after passing through the condensation section 14C of the heat exchanger 14, which transfers thermal energy thereto because of the condensation of the refrigerating liquid, becomes a flow D which obviously features a temperature greater than that of the flow C and is injected into the internal environment via the inlet aperture 32. As a result, a significant part of the thermal energy contained in the flow A is re-injected into the internal environment via the flow D.

Take into account that in correspondence with the compensation section 14C a condensation might form. In the absence of the fins 24, if the pipes 16 feature a tilt of even few degrees, such a condensation streams down along the pipes by gravity and can be collected in correspondence with end featuring the lower elevation by a small basin underneath, to be periodically emptied or which communicates with a drain. If the fins 24 are present, in order to achieve the same purpose, it might be convenient to tilt the heat exchanger 14 in such a way that the pipes 16 are laid horizontal (which, as already said, results in slightly reducing the efficiency of the heat exchanger 14) but the fins 24 are tilted, in such a way that the condensation streams down along the lower edge of said fins by gravity, in order to be collected in correspondence with the lower elevation end of the fins, still by using a small basin underneath.

In the specific case of the hood 110 the thermal energy recovery means comprise, besides the heat exchanger 14, a second recovery device (second thermal energy recovery stage) of a crossflow type. As a matter of fact, the air sucked through the inlets 30 forms the flow C, passes through a properly shaped duct 36 which laterally encloses the exhaust duct 34. Therefore, the flow C externally laps the exhaust duct 34. If the latter is made of a good heat conductor material, part of the thermal energy still contained in the flow B that flows therein is transferred to the flow C via the side wall of the duct 34. Let's indicate said second thermal recovery device as a whole with the reference numeral 15.

In the hood 110 there might also be provided that the heat exchanger 14 (which is an independent element, with no connections to any other elements) is removable to make it possible to inspect, clean, and, if necessary, replace it. Considering the dimensions of the heat exchanger 14, it might even be specified that it be periodically washed in a normal dish-washer.

The hood 110 can be equipped with a microprocessor-type control unit which detects, by means of appropriate thermocouples, the temperature of the air outlet to the external world (flow B) and of the incoming air upstream and downstream the condensation section 14C, and regulates the speed of the first and second suction devices accordingly, in order to maximize the efficiency of thermal energy recovery.

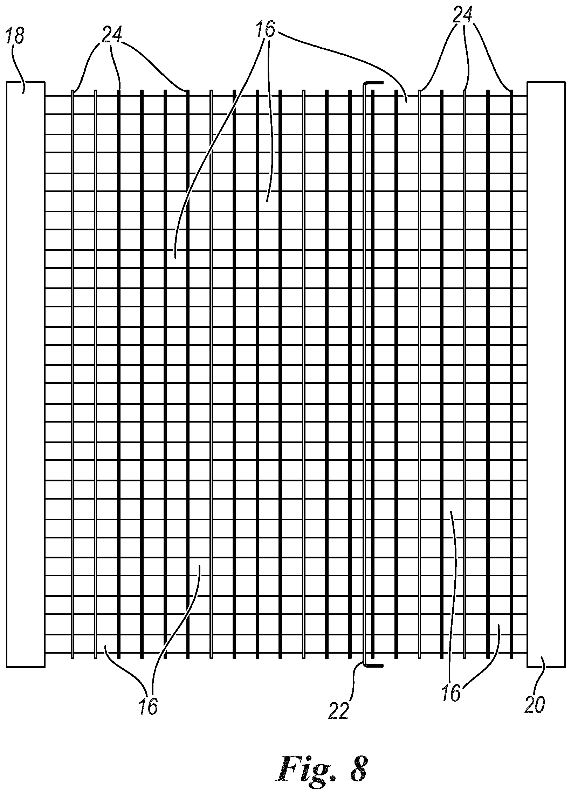

Let's now consider, with reference to the diagrams in figures 8-11, the different possible locations of the individual elements that make up the extractor hood according to the present invention, as well as its respective operating modes.

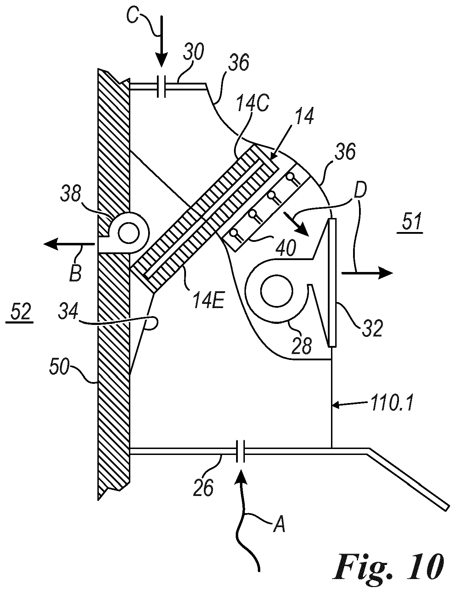

A first type of extractor hood according to the present invention, identified by the reference numeral 110.1, is very schematically represented in figure 10, which basically represents a vertical cross sectional view thereof made with a plane perpendicular to the wall, indicated by the reference numeral 50, which separates the internal environment 51 in which the hood 110.1 is located from the external environment indicated by the reference numeral 52.

The hood 110.1 is similar to the hood 110 in that it is provided with an exhaust duct toward the external world similar to the exhaust duct 34 of the hood 10, therefore we will give the same reference numeral thereto. The suction of the gaseous mixture above the cooktop (not shown here neither for the sake of simplicity, but obviously located below the hood 110.1) takes place because of the activation of that which formerly called first suction device (of a conventional type) and referred to here by the reference numeral 38, which generate a first flow (flow A) which lets in the hood 110.1 via an usual aperture provided with filters, generically indicated by the same reference numeral as the suction aperture 26 of the hood 110. The first suction device 38 is in this specific case located downstream (with reference to the direction of the flow A) with respect to the heat pipe exchanger visible in figure 10, equivalent to the heat exchanger 14 of the hood 10 and consequently identified by the same reference numeral.

The sucked flow A concerns the evaporation section 14E of the heat exchanger 14, therefore the flow B expelled into the external environment 52 features a temperature lower than that of the flow A. Obviously the function of the first suction device 38 can be replaced by putting the exhaust channel 34 in direct communication to a chimney provided with an appropriate natural draught.

Conversely, the condensation section 14C of the heat exchanger 14 is concerned by a second flow (flow C) which is picked-up directly from the internal environment 51 via an aperture equivalent to the two inlets 30 of the hood 10, and consequently this aperture is identified by the same reference numeral.

The flow C is generated because of the operation of that which we called second suction device, which performs a function equivalent to that of the three recovery fans 28 of the hood 110, whereby we will identify it with the same reference numeral. The flow C collide with the condensation section 14C of the heat exchanger 14 thus acquiring thermal energy and originating a flow D (which is still part of said second flow) which is injected into the internal environment and features a temperature higher than that of the flow C.

It is worth noting that the heat pipe exchanger 14 is represented in figure 10 (as well as in the remaining figures) very much tilted with respect to the horizontal line. However, take into account that such a tilt is purely indicative. As a matter of fact, as already pointed out with reference to the hood 10, such tilt might even be of few degrees or even nil without jeopardizing the operation of the heat pipe exchanger.

The hood 110.1 in figure 10 is preset to a winter operation (temperature of the air sucked from the external environment lower with heat recovery from the inside). However, note that in the specific case here illustrated, downstream (with reference to the second flow C, D) of the condensation section 14C there is provided a shutter 40 which is represented in its open position in figure 10. Closing such shutter and activating the first suction device 38 only (second suction device 28 deactivated) sets the hood 110.1 to the summer operating situation, wherein it would in any case be meaningless to recover heat to be injected into the internal environment.

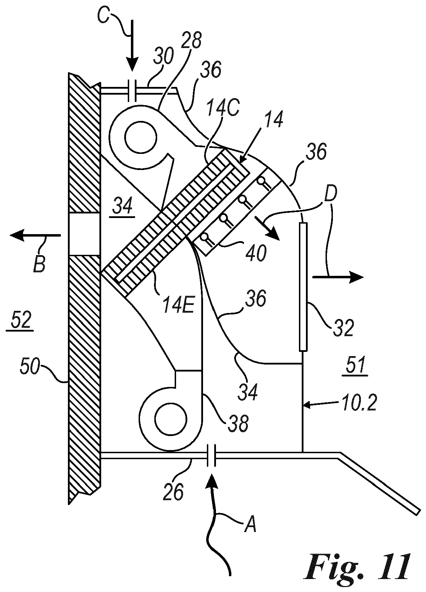

A variant, indicated by the reference numeral 110.2, of the hood 110.1 is represented in the diagram of figure 11 in which elements equal or similar to those of the hood 110.1 have been identified by the same reference numerals. The only differences consist in that in the hood 110.2 the suction device 38 is mounted upstream with respect to the evaporation section 14E, and likewise also upstream with respect to the condensation section 14C is arranged the second suction device 28. We think it is not necessary to add anything for that which concerns the hood 110.2.

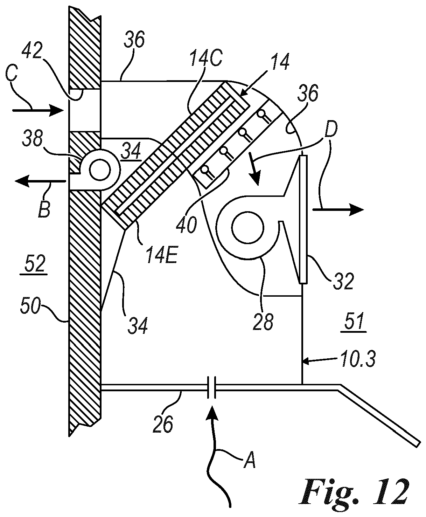

A different solution 110.3 of an extractor hood according to the present invention is depicted by the diagram in figure 12.

That which makes the hood 110.3 different from hood 110.1 is in that the former picks-up air from the external environment 52 through an aperture 42 present in the wall 50, whereby the incoming flow C is in this case made up of external air. The remaining components of the hood 110.3 are similar or equal to those of the hood 110.1 and consequently the same reference numerals have been used to identify them.

The hood 110.3 in figure 12 is also preset to winter operation, but with heat recovery from the external world. In this case too, downstream (with reference to the second flow C, D) of the condensation section 14C there is provided a shutter 40, closing which and only activating the first suction device 38 (second suction device 28 switched-off) sets the hood 10.1 to a summer operating condition (no heat recovered from the external world).

It is evident that it is possible to implement a hood according to the present invention wherein, by means of a two-way valve, located in the incoming air duct 34, upstream with respect to the condensation section 14E, it is possible to suck air (flow C) selectively from the external environment 52 or from the internal one 51.

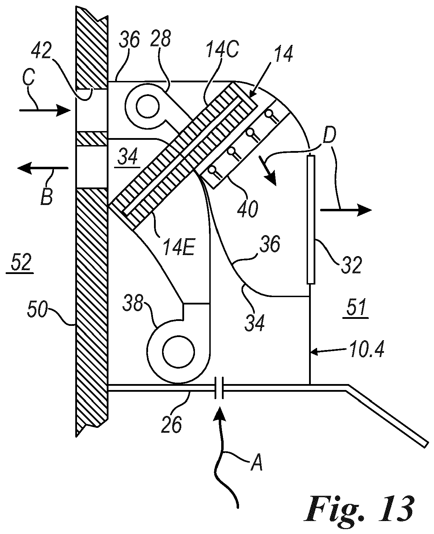

A variant 110.4 of the hood 110.3 is depicted in the diagram in figure 13, in which elements equal or similar to those of the hood 110.3 have been identified by the same reference numerals. The only differences consist in that in the hood 110.4 the first suction device 38 is mounted upstream with respect to the evaporation section 14E, and likewise also upstream with respect to the condensation section 14C is mounted the second suction device 28.

Obviously, in all cases described above, if the second suction device 28 is not activated, then the hood operates as a traditional extractor hood without thermal energy recovery.

It is also worth noting that in all hoods depicted in figures 10-13, unlike the hood 110, there is no provided a second thermal energy recovery stage. However, it is evident that, if one so requires, there are no particular difficulties in transforming such hoods into hoods provided with a second thermal energy recovery stage.

## Claims

1. A kitchen extractor hood (110), provided with means (38) for generating a first flow (A, B) of a gaseous mixture taken from the internal environment (51) in which the hood (110) is located and releasing it into the external environment (52), the hood (110) being also provided with means (28) for generating a second flow (C, D) of a gaseous mixture taken from the external environment (52) and/or from the internal environment (51) and injecting it into the internal environment (51), the hood (110) being also provided with means (10) for recovering part of the thermal energy contained in the first flow (A, B) and transferring it to the second flow (C, D), wherein the means (10) for recovering thermal energy comprise a heat recovery device (14) comprising a heat exchanger of the heat pipe type (16), having an evaporation section (14E) dealing with the first flow (A, B) and a condensation section (14C) dealing with the second flow (C, D), and wherein the heat recovery device (14) based on a heat pipe exchanger (16) comprises:
- a plurality of equal pipes (16), arranged parallel to but spaced from each other, the pipes (16) being hermetically closed at their two ends and containing a refrigerating fluid in the saturation condition;
- a diaphragm (22) perpendicular to the pipes (16), but such as not to interrupt them, which separates the first flow (A, B) from the second flow (C, D), thus separating the evaporation section (14E) from the condensation section (14C) of the heat exchanger (14),
**characterized in**
**that** upstream, with reference to the second flow (C, D), of the condensation section (14C) there are provided second flow (C, D) filtering means of the type used in hoods,
**that** there are provided means for varying the tilt of the pipes (16) of the heat recovery device (14)
and **that** the position of the diaphragm (22) is determined as a function of the ratio between the volumetric rates of the first flow (A, B) and of the second flow (C, D), of the thermal exchange surface of the heat exchanger (14), and of the tilt of the pipes (16) of the latter.

2. A hood (110) according to claim 1, wherein the means (10) for recovering part of the thermal energy contained in the first flow (A, B) also comprise a second heat recovery device (15) comprising a crossflow heat exchanger, in which the second flow (C), upstream with respect to the condensation section (14C), laps the outside of an exhaust duct (34) in which the first flow (B) passes through downstream with respect to the evaporation section (14E), the exhausted duct (34) having in its respective part the walls made of a heat conductor material.

3. A hood (110) according to claim 1, wherein the means for generating the first (A, B) and the second (C, D) flows comprise a first (38) and a second (28) suction devices respectively mounted upstream or downstream, with reference to the direction of its respective flow (A, B; C, D), respectively of the evaporation section (14E) and of the condensation section (14C) of the heat recovery device (14) based on a heat pipe exchanger (16).

4. A hood (110) according to claim 1, wherein upstream, with reference to the first flow (A, B), of the evaporation section (14E) there are provided first flow (A, B) filtering means of the type used in hoods.

5. A hood (110) according to claim 1, wherein the second flow (C, D) is intercepted by a shutter (40) which is closed whenever it is not desired to have thermal energy recovery or during the summer operation of the hood (110).

6. A hood (110) according to claim 1, wherein the pipes (16) are arranged in a plurality of superimposed ranks.

7. A hood (110) according to claim 1, wherein, in order to increase the thermal exchange surface, the heat recovery device (14) based on the use of heat pipe (16) comprises a sequence of fins (24) equally spaced from each other and perpendicular to the pipes (16), such as not to interrupt their continuity.

8. A hood (110) according to claim 1, wherein the heat recovery device (14) is removable.

9. A hood (110) according to claim 1, wherein the refrigerating fluid contained in the pipes (16) is of the type used in refrigerators.

## Patentansprüche

1. Küchenabzugshaube (110), die mit Mitteln (38) zum Erzeugen eines ersten Stroms (A, B) einer gasförmigen Mischung, die der inneren Umgebung (51) entnommen wird, ausgestattet ist, wobei die Haube (110) dazu angeordnet ist, ihn in die äußere Umgebung (52) zu entlassen, wobei die Haube (110) auch mit Mitteln (28) zum Erzeugen eines zweiten Stroms (C, D) einer gasförmigen Mischung, die der äußeren Umgebung (52) und/oder der inneren Umgebung (51) entnommen wird, ausgestattet ist, um sie in die innere Umgebung (51) einzublasen, wobei die Haube (110) auch mit Mitteln (10) zum Rückgewinnen eines Teiles der thermischen Energie, die in dem ersten Strom (A, B) enthalten ist, und zum Übertragen dieser Energie auf den zweiten Strom (C, D) ausgestattet ist, wobei die Mittel (10) zum Rückgewinnen thermischer Energie eine Wärmerückgewinnungsvorrichtung (14) umfassen, die einen Wärmetauscher des Wärmerohrtyps (16) umfasst, der einen Verdampfungsabschnitt (14E), der dem ersten Strom (A, B) zugeordnet ist, und einen Kondensationsabschnitt (14C) hat, der dem zweiten Strom (C, D) zugeordnet ist, und wobei die auf einem Wärmerohrwärmetauscher (16) basierende Wärmerückgewinnungsvorrichtung (14) Folgendes umfasst:
- eine Vielzahl gleicher Rohre (16), die parallel, jedoch voneinander beabstandet angeordnet sind, wobei die Rohre (16) an ihren beiden Enden hermetisch verschlossen sind und ein Kältemittelfluid im Sättigungszustand enthalten;
- eine Scheidewand (22), die senkrecht zu den Rohren (16) angeordnet ist, diese jedoch nicht unterbricht, die den ersten Strom (A, B) von dem zweiten Strom (C, D) trennt, wodurch der Verdampfungsabschnitt (14E) von dem Kondensationsabschnitt (14C) des Wärmetauschers (14) getrennt wird,
**dadurch gekennzeichnet,**
**dass** bezogen auf den zweiten Strom (C, D) stromaufwärts von dem Kondensationsabschnitt (14C) Filtermittel für den zweiten Strom (C, D) des Typs, der in Hauben verwendet wird, vorgesehen sind,
**dass** Mittel zum Ändern der Neigung der Rohre (16) der Wärmerückgewinnungsvorrichtung (14) vorgesehen sind,
und **dass** die Position der Scheidewand (22) in Abhängigkeit von dem Verhältnis zwischen den volumetrischen Raten des ersten Stroms (A, B) und des zweiten Stroms (C, D), der Wärmetauschfläche des Wärmetauschers (14) und der Neigung von dessen Rohren (16) bestimmt wird.

2. Haube (110) gemäß Anspruch 1, wobei die Mittel (10) zum Rückgewinnen eines Teils der in dem ersten Strom (A, B) enthaltenen thermischen Energie auch eine zweite Wärmerückgewinnungsvorrichtung (15) umfassen, die einen Querstromwärmetauscher umfasst, in dem der zweite Strom (C) bezogen auf den Kondensationsabschnitt (14C) stromaufwärts gegen die Außenseite eines Abluftkanals (34) trifft, in dem der erste Strom (B) bezogen auf den Verdampfungsabschnitt (14E) stromabwärts hindurchgelangt, wobei die Wände des Abluftkanals (34) in seinem jeweiligen Teil aus einem wärmeleitenden Material hergestellt sind.

3. Haube (110) gemäß Anspruch 1, wobei die Mittel zum Erzeugen des ersten (A, B) und des zweiten (C, D) Stroms eine erste (38) und ein zweite (28) Saugvorrichtung umfassen, die stromaufwärts bzw. stromabwärts bezogen auf die Richtung ihres entsprechenden Stroms (A, B; C, D) von dem Verdampfungsabschnitt (14E) bzw. von dem Kondensationsabschnitt (14C) der auf einem Wärmerohrwärmetauscher (16) basierenden Wärmerückgewinnungsvorrichtung (14) verbaut sind.

4. Haube (110) gemäß Anspruch 1, wobei bezogen auf den ersten Strom (A, B) stromaufwärts des Verdampfungsabschnitts (14E) Filtermittel für den ersten Strom (A, B) des Typs vorgesehen sind, der in Hauben verwendet wird.

5. Haube (110) gemäß Anspruch 1, wobei der zweite Strom (C, D) durch einen Verschluss (40) unterbrochen wird, der immer dann geschlossen wird, wenn während des Sommerbetriebs der Haube (110) ein Rückgewinnen thermischer Energie nicht erwünscht ist.

6. Haube (110) gemäß Anspruch 1, wobei die Rohre (16) in einer Vielzahl übereinander liegender Lagen angeordnet sind.

7. Haube (110) gemäß Anspruch 1, wobei zum Vergrößern der Wärmetauschfläche die auf der Verwendung eines Wärmerohrs (16) basierende Wärmerückgewinnungsvorrichtung (14) eine Abfolge von Rippen (24) umfasst, die gleichmäßig voneinander beabstandet sind und senkrecht zu den Rohren (16) sind, um so ihre Kontinuität nicht zu unterbrechen.

8. Haube (110) gemäß Anspruch 1, wobei die Wärmerückgewinnungsvorrichtung (14) entfernbar ist.

9. Haube (110) gemäß Anspruch 1, wobei das Kältemittelfluid, das in den Rohren (16) enthalten ist, des Typs ist, der in Kühleinrichtungen verwendet wird.

## Revendications

1. Hotte de cuisine (110), dotée d'un moyen (38) destiné à générer un premier écoulement (A, B) d'un mélange gazeux prélevé dans l'environnement interne (51) dans lequel la hotte (110) est située et à le libérer dans l'environnement externe (52), la hotte (110) étant également dotée d'un moyen (28) destiné à générer un second écoulement (C, D) d'un mélange gazeux prélevé dans l'environnement externe (52) et/ou dans l'environnement interne (51) et à l'injecter dans l'environnement interne (51), la hotte (110) étant également dotée d'un moyen (10) destiné à récupérer une partie de l'énergie thermique contenue dans le premier écoulement (A, B) et à la transférer au second écoulement (C, D), où le moyen (10) destiné à récupérer de l'énergie thermique comprend un dispositif de récupération de chaleur (14) comprenant un échangeur thermique du type à tubes caloducs (16), présentant une section d'évaporation (14E) se rapportant au premier écoulement (A, B) et une section de condensation se rapportant au second écoulement (C, D), et où le dispositif de récupération de chaleur (14) basé sur un échangeur à tubes caloducs (16) comprend :
- une pluralité de tubes identiques (16), agencés parallèlement les uns aux autres mais en étant espacés les uns des autres, les tubes (16) étant fermés hermétiquement au niveau de leurs deux extrémités et contenant un fluide frigorigène à l'état de saturation ;
- un diaphragme (22) perpendiculaire aux tubes (16), mais de sorte à ne pas les interrompre, lequel sépare le premier écoulement (A, B) du second écoulement (C, D), séparant ainsi la section d'évaporation (14E) de la section de condensation (14C) de l'échangeur thermique (14),
**caractérisée**
**en ce que** en amont, par référence au second écoulement (C, D), de la section de condensation (14C), il est prévu un moyen de filtration pour le second écoulement (C, D), du type utilisé dans les hottes,
**en ce qu'**il est prévu un moyen destiné à modifier l'inclinaison des tubes (16) du dispositif de récupération de chaleur (14)
et **en ce que** la position du diaphragme (22) est déterminée comme une fonction du rapport entre les débits volumiques du premier écoulement (A, B) et du second écoulement (C, D), de la surface d'échange thermique de l'échangeur thermique (14), et de l'inclinaison des tubes (16) de ce dernier.

2. Hotte (110) selon la revendication 1, dans laquelle le moyen (10) destiné à récupérer une partie de l'énergie thermique contenue dans le premier écoulement (A, B) comprend également un second dispositif de récupération de chaleur (15) comprenant un échangeur thermique à courant transversal, dans lequel le second écoulement (C), en amont de la section de condensation (14C), s'enroule autour de l'extérieur d'un conduit d'évacuation (34) que le premier écoulement (B) traverse en aval de la section d'évaporation (14E), le conduit d'évacuation (34) présentant dans sa partie respective les parois constituées d'un matériau thermoconducteur.

3. Hotte (110) selon la revendication 1, dans laquelle les moyens destinés à générer les premier (A, B) et second (C, D) écoulements comprennent un premier (38) et un second (28) dispositifs d'aspiration respectivement montés en amont ou en aval, par référence au sens de son écoulement respectif (A, B ; C, D), respectivement de la section d'évaporation (14E) et de la section de condensation (14C) du dispositif de récupération de chaleur (14) basé sur un échangeur à tubes caloducs (16).

4. Hotte (110) selon la revendication 1, dans laquelle en amont, par référence au premier écoulement (A, B), de la section d'évaporation (14E), il est prévu un moyen de filtration pour le premier écoulement (A, B), du type utilisé dans les hottes.

5. Hotte (110) selon la revendication 1, dans laquelle le second écoulement (C, D) est intercepté par un obturateur (40) lequel est fermé dès qu'il n'est pas souhaité de récupérer de l'énergie thermique ou pendant le fonctionnement estival de la hotte (110).

6. Hotte (110) selon la revendication 1, dans laquelle les tubes (16) sont agencés selon une pluralité de rangées superposées.

7. Hotte (110) selon la revendication 1, dans laquelle, de sorte à augmenter la surface d'échange thermique, le dispositif de récupération de chaleur (14) basé sur l'utilisation de tubes caloducs (16) comprend une série d'ailettes (24) également espacées les unes des autres et perpendiculaires aux tubes (16), de sorte à ne pas interrompre leur continuité.

8. Hotte (110) selon la revendication 1, dans laquelle le dispositif de récupération de chaleur (14) est amovible.

9. Hotte (110) selon la revendication 1, dans laquelle le fluide frigorigène contenu dans les tubes (16) est du type utilisé dans les réfrigérateurs.
